# EUROPÄISCHE PATENTANMELDUNG

(11) **EP 0 895 392 A2**
(43) Veröffentlichungstag der Anmeldung: **03.02.1999**
(21) Anmeldenummer: 98114369.6
(22) Anmeldetag: 30.07.1998
(51) Int. Cl.: H04M 1/57, H04M 1/72, H04M 19/04

(54) **Telekommunikationsendgerät**

(30) Priorität: 31.07.1997 DE 19733050
(71) Anmelder: ROBERT BOSCH GMBH, 70442 Stuttgart (DE)
(72) Erfinder: Moeller, Stephan, 30519 Hannover (DE)

(57) **Zusammenfassung**

Es wird ein Telekommunikationsendgerät (1) vorgeschlagen, das zu einer schnelleren Identifizierung eines rufenden Teilnehmers dient. Das Telekommunikationsendgerät (1) umfaßt eine Rufidentifikationsschaltung (5), die einen rufenden Teilnehmer identifiziert. Das Telekommunikationsendgerät (1) gibt bei einem ankommenden Ruf in Abhängigkeit des in der Rufidentifikationsschaltung (5) identifizierten Teilnehmers ein akustisches Signal ab. Dem Telekommunikationsendgerät (1) ist eine Speicherliste (10) mit Speicherplätzen (11,..., 18) zugeordnet, in denen teilnehmerspezifische Daten ablegbar sind. Mindestens einem Speicherplatz (11,..., 18) in der Speicherliste (10) ist ein akustisches Signal zugeordnet, das das Telekommunikationsendgerät (1) abgibt, wenn der durch die auf dem Speicherplatz (11,..., 18) abgelegten Daten spezifizierte Teilnehmer bei einem eingehenden Ruf identifiziert ist.

## Beschreibung

### Stand der Technik

Die Erfindung geht von einem Telekommunikationsendgerät nach der Gattung des Hauptanspruchs aus.

Aus der EP 0 408 041 B1 ist bereits eine Übertragungseinheit mit einer Funktion und einem Verfahren zur Anruferidentifizierung in einem digitalen Fernmeldenetz bekannt. Dabei wird eine Anrufaufbaunachricht zum Zeitpunkt des Anrufs an einen Empfänger übertragen, wobei diese Anrufaufbaunachricht einen den Anrufer ausweisenden Anrufercode beinhaltet. Weiterhin ist eine Ermittlungseinrichtung vorgesehen, die auf die Übertragung der Anrufaufbaunachricht an den Empfänger zum Zwecke der Ermittlung des Anrufercodes von dieser Anrufaufbaunachricht reagiert. Stimmt der ermittelte Anrufercode mit einem in einem Speicherbereich abgespeicherten Anrufercode überein, so wird eine diesem Anrufercode entsprechende Anruferkenndateninformation an eine Anzeigeeinrichtung weitergeleitet.

### Vorteile der Erfindung

Das erfindungsgemäße Telekommunikationsendgerät mit den Merkmalen des Hauptanspruchs hat demgegenüber den Vorteil, daß eine Identifizierung des rufenden Teilnehmers auch dann erfolgt, wenn aufgrund der räumlichen und örtlichen Gegebenheiten kein Blickkontakt vom Benutzer zum Telekommunikationsendgerät bzw. dessen Anzeigeeinrichtung besteht. Dies ist beispielsweise dann der Fall, wenn sich das Telekommunikationsendgerät in einem anderen Raum oder bei Ausbildung als Mobiltelefon in einer Jackentasche befindet.

### Generell ermöglicht das erfindungsgemäße

Telekommunikationsendgerät eine schnellere Identifizierung des rufenden Teilnehmers, wobei ein Blick des Benutzers auf die Anzeigeeinrichtung des Telekommunikationsendgerätes nicht erforderlich ist.

Durch die in den Unteransprüchen aufgeführten Maßnahmen sind vorteilhafte Weiterbildungen und Verbesserungen des im Hauptanspruch angegeben Telekommunikationsendgerätes möglich.

Besonders vorteilhaft ist dabei die Zuordnung eines Sprachbausteins zum Telekommunikationsendgerät, wobei in dem Sprachbaustein als Sprachsignale Namen von Teilnehmern speicherbar und/oder synthetisierbar und jeweils mindestens einem Speicherplatz in der Speicherliste zuweisbar sind. Durch eine Sprachausgabe des Namens des rufenden Teilnehmers ist die Erkennung bzw. Identifizierung des rufenden Teilnehmers für den Benutzer besonders einfach.

Vorteilhaft ist auch, daß ein Klingelsignalgenerator vorgesehen ist, der Klingelsignale erzeugt, die jeweils mindestens einem Speicherplatz in der Speicherliste zugeordnet sind. Auf diese Weise läßt sich eine akustische Anrufmitteilung besonders einfach, aufwandsarm und preisgünstig realisieren.

Vorteilhaft ist auch, daß eine Eingabeeinheit vorgesehen ist, über die die Zuordnung der akustischen Signale zu den Speicherplätzen in der Speicherliste vorgebbar ist. Auf diese Weise läßt sich die Zuordnung den individuellen Bedürfnissen des Benutzers anpassen.

### Zeichnung

Ausführungsbeispiele der Erfindung sind in der Zeichnung dargestellt und in der nachfolgenden Beschreibung näher erläutert. Es zeigen Figur 1 ein Blockschaltbild einer ersten Ausführungsform eines erfindungsgemäßen Telekommunikationsendgerätes, Figur 2 ein Blockschaltbild einer zweiten Ausführungsform des erfindungsgemäßen Telekommunikationsendgerätes und die Figuren 3 bis 6 den zeitlichen Verlauf verschiedener Klingelsignale.

### Beschreibung der Ausführungsbeispiele

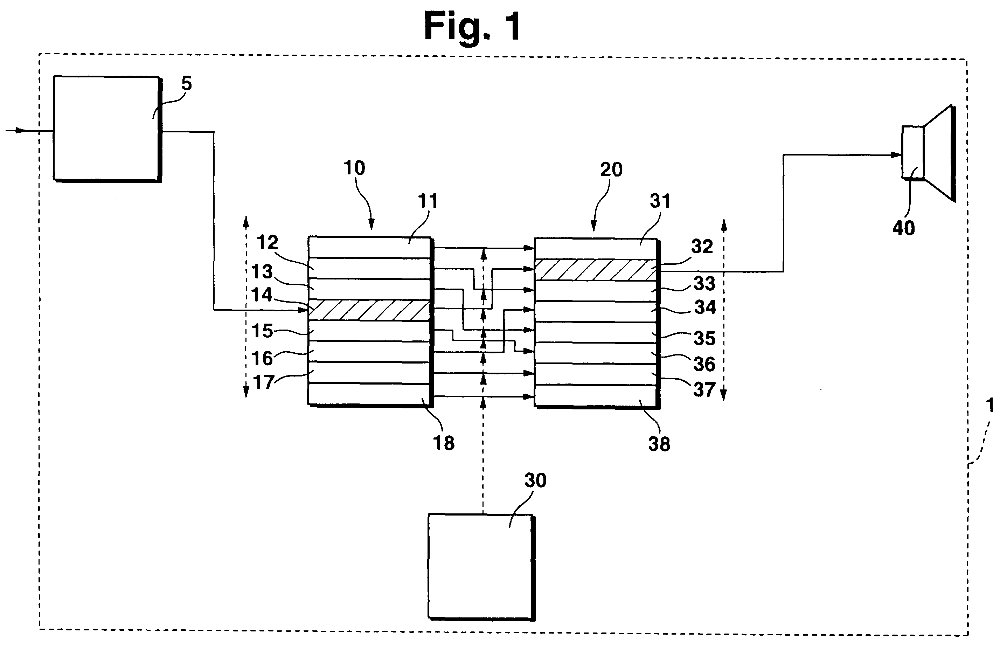

In Figur 1 kennzeichnet 1 ein Telekommunikationsendgerät, das beispielsweise als Mobiltelefon, als Schnurlostelefon oder als schnurgebundenes Telefon ausgebildet sein kann. Das Blockschaltbild gemäß Figur 1 enthält nur die für die Erfindung relevanten Bauteile. Ankommende Rufinformationen werden einer Rufidentifikationsschaltung 5 im Telekommunikationsendgerät 1 zugeführt, die Zugriff auf eine Speicherliste 10 hat. Die Speicherliste 10 kann im Telekommunikationsendgerät 1 selbst oder in einer separaten Übertragungseinrichtung, beispielsweise einer Vermittlungsstelle angeordnet sein. Im beschriebenen Ausführungsbeispiel ist die Speicherliste 10 im Telekommunikationsendgerät 1 angeordnet und umfaßt acht Speicherplätze 11,..., 18. Die Speicherplätze 11,..., 18 der Speicherliste 10 sind jeweils einem von acht Speicherplätzen 31,..., 38 eines Sprachbausteins 20 zugeordnet. Dabei ist der erste Speicherplatz 11 der Speicherliste 10 dem ersten Speicherplatz 31 des Sprachbausteins 20, der zweite Speicherplatz 12 der Speicherliste 10 dem dritten Speicherplatz 33 des Sprachbausteins 20, der dritte Speicherplatz 13 der Speicherliste 10 dem fünften Speicherplatz 35 des Sprachbausteins 20, der vierte Speicherplatz 14 der Speicherliste 10 dem zweiten Speicherplatz 32 des Sprachbausteins 20, der fünfte Speicherplatz 15 der Speicherliste 10 dem sechsten Speicherplatz 36 des Sprachbausteins 20, der sechste Speicherplatz 16 der Speicherliste 10 dem vierten Speicherplatz 34 des Sprachbausteins 20, der siebte Speicherplatz 17 der Speicherliste 10 dem siebten Speicherplatz 37 des Sprachbausteins 20 und der achte Speicherplatz 18 der Speicherliste 10 dem achten Speicherplatz 38 des Sprachbausteins 20 zugeordnet. Diese Zuordnungen können vom Benutzer über eine Eingabeeinheit 30 des Telekommunikationsendgerätes 1, beispielsweise mittels eines Eingabemenüs, beliebig geändert werden, so daß auch mehrere Speicherplätze der Speicherliste 10 einem einzigen Speicherplatz des Sprachbausteins 20 zugeordnet sein können. Die Sprachausgabe eines auf einem Speicherplatz 31,..., 38 des Sprachbausteins 20 gespeicherten akustischen Signals erfolgt über einen Lautsprecher 40 des Telekommunikationsendgerätes 1.

Weist das Telekommunikationsendgerät 1 einen ISDN-Anschluß auf oder handelt es sich um ein GSM-Telefon, so wird bei einem eingehenden Ruf eine den Rufenden identifizierende Rufinformation, beispielsweise dessen Rufnummer an das Telekommunikationsendgerät 1 mitübertragen. Diese Rufinformation wird in der Rufidentifikationsschaltung 5 aus den übertragenen Daten ermittelt und mit gleichartigen auf den Speicherplätzen 11,..., 18 der Speicherliste 10 abgelegten Daten verglichen. Handelt es sich bei den Rufinformationsdaten um die Rufnummer des rufenden Teilnehmers, so sind auf den Speicherplätzen 11,..., 18 der Speicherliste 10 ebenfalls Rufnummern abgespeichert. Dabei müssen nicht alle Speicherplätze 11,..., 18 der Speicherliste 10 mit Rufnummern belegt sein. Stimmt die von der Rufidentifikationsschaltung 5 ermittelte Rufinformation mit dem auf einem der Speicherplätze 11,..., 18 abgespeicherten Rufinformationsdaten überein, so wird der diesem Speicherplatz 11,..., 18 der Speicherliste 10 zugeordnete Speicherplatz 31,..., 38 des Sprachbausteins 20 ausgewählt und das dort abgespeicherte akustische Signal vom Lautsprecher 40 wiedergegeben. Im beschriebenen Ausführungsbeispiel gemäß Figur 1 wurde bei einem eingehenden Ruf von der Rufidentifikationsschaltung 5 eine Rufinformation ermittelt, die auf dem vierten Speicherplatz 14 der Speicherliste 10 abgespeichert ist. Der vierte Speicherplatz 14 der Speicherliste 10 ist in Figur 1 daher schraffiert eingezeichnet. Der dem vierten Speicherplatz 14 der Speicherliste 10 zugeordnete zweite Speicherplatz 32 des Sprachbausteins 20 ist ebenfalls schraffiert in Figur 1 dargestellt. Das auf dem zweiten Speicherplatz 32 des Sprachbausteins 20 gespeicherte akustische Signal wird dann vom Lautsprecher 40 wiedergegeben. Durch gestrichelte Doppelpfeile ist in Figur 1 angedeutet, daß jeder der acht Speicherplätze 11,..., 18 der Speicherliste 10 von der Rufidentifikationsschaltung 5 auswählbar ist, wenn die aus dem Telekommunikationsnetz empfangenen Rufinformationsdaten mit den Rufinformationsdaten auf einem dieser Speicherplätze 11,..., 18 übereinstimmen, und jeder der acht Speicherplätze 31,..., 38 des Sprachbausteins 20 für die akustische Wiedergabe mittels des Lautsprechers 40 vorgesehen sein kann, falls eine Zuordnung zu einem ausgewählten Speicherplatz 11, ..., 18 der Speicherliste 10 besteht.

Die auf den Speicherplätzen 31,..., 38 des Sprachbausteins 20 gespeicherten akustischen Signale sind Sprachsignale, die beispielsweise den Namen von rufenden Teilnehmern entsprechen und gegebenenfalls vom Benutzer über ein in Figur 1 nicht dargestelltes Mikrofon selbst eingegeben und über die Eingabeeinheit 30 abgespeichert werden können. Es ist jedoch auch möglich, daß auf den Speicherplätzen 11, ..., 18 der Speicherliste 10 abgelegten Rufinformationen die zugehörigen Teilnehmernamen zugeordnet und ebenfalls auf dem entsprechenden Speicherplatz 11,..., 18 der Speicherliste 10 abgespeichert sind. Ein dem von der Rufidentifikationsschaltung 5 ausgewählten Namen in der Speicherliste 10 kann dann ein entsprechendes den Namen beinhaltendes Sprachsignal vom Sprachbaustein 20 synthetisiert werden, so daß im Sprachbaustein 20 keine Speicherplätze mehr erforderlich sind und die Bezugszeichen 31,..., 38 zur Veranschaulichung jeweils ein synthetisiertes und dem jeweils zugeordneten Namen entsprechendes Sprachsignal kennzeichnen.

Es ist auch ein Sprachbaustein 20 denkbar, der acht Speicherplätze 31,..., 38 aufweist, jedoch für den Fall, daß auf einen dieser Speicherplätze 31,..., 38 kein Namensprachsignal abgespeichert ist, ein Namensprachsignal synthetisiert, falls auf dem zugeordneten Speicherplatz 11,..., 18 der Speicherliste 10 ein Name abgespeichert ist.

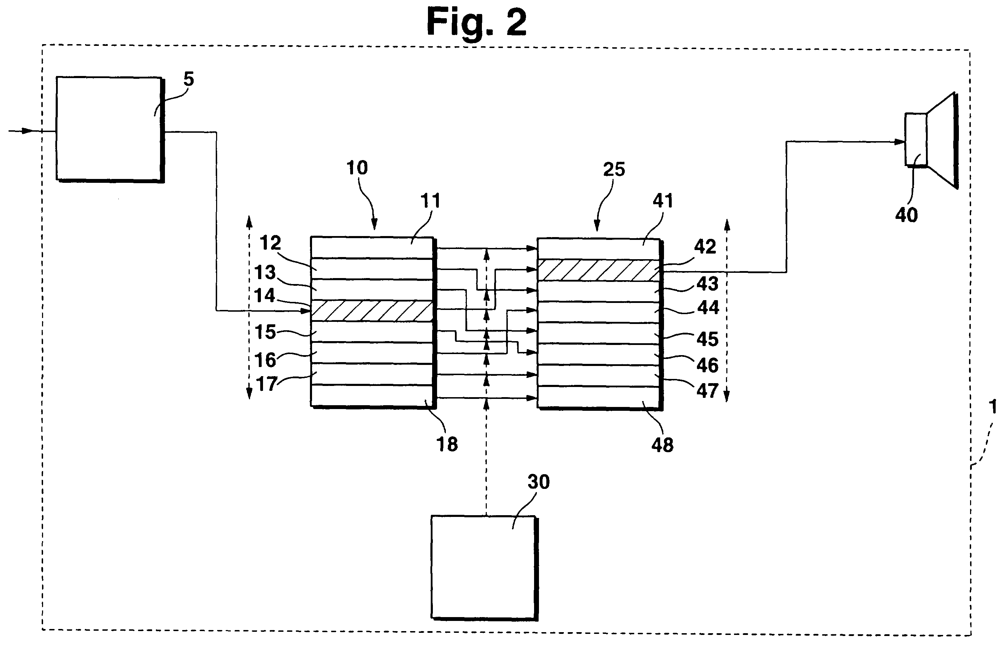

In einem weiteren Ausführungsbeispiel gemäß Figur 2 ist anstelle des Sprachbausteins 20 ein Klingelsignalgenerator 25 vorgesehen. Ansonsten entspricht die Ausgestaltung des Ausführungsbeispiels gemäß Figur 2 der Ausgestaltung des Ausführungsbeispiels gemäß Figur 1, wobei gleiche Bezugszeichen gleiche Elemente kennzeichnen. Der Klingelsignalgenerator 25 kann im beschriebenen Ausführungsbeispiel acht verschiedene Klingelsignale 41,..., 48 erzeugen, die jeweils einem Speicherplatz 11,..., 18 der Speicherliste 10 zugeordnet sein kann. Dabei kann ein Klingelsignal auch mehreren Speicherplätzen 11,..., 18 der Speicherliste 10 zugeordnet sein. Dies ist beispielsweise dann sinnvoll, wenn ein rufender Teilnehmer mit mehreren verschiedenen Rufnummern bzw. Rufinformationen in der Speicherliste 10 abgespeichert ist. Dies gilt auch für den Fall beim Ausführungsbeispiel gemäß Figur 1, in dem ein Sprachsignal mehreren Speicherplätzen 11,..., 18 der Speicherliste 10 zugeordnet sein kann. Die akustische Identifikation eines rufenden Teilnehmers gemäß dem Ausführungsbeispiel nach Figur 2 erfolgt also durch unterschiedliche Klingelsignale, wobei durch die beiden gestrichelten Doppelpfeile in Figur 2 wiederum angedeutet ist, daß jeder der acht Speicherplätze 11,..., 18 der Speicherliste 10 durch die Rufidentifikationsschaltung 5 bei Übereinstimmung der aus dem Telekommunikationsnetz empfangenen Rufinformation mit einer abgespeicherten Rufinformation auswählbar ist und daß in Abhängigkeit der Zuordnung zu einem Speicherplatz 11,..., 18 der Speicherliste 10 eines der Klingelsignale 41,..., 48 vom Klingelsignalgenerator 25 erzeugt und über den Lautsprecher 40 akustisch wiedergegeben werden kann. Der erste Speicherplatz 11 der Speicherliste 10 ist dabei gemäß Figur 2 dem ersten Klingelsignal 41 zugeordnet, der zweite Speicherplatz 12 der Speicherliste 10 ist dem dritten Klingelsignal 43 zugeordnet, der dritte Speicherplatz 13 der Speicherliste 10 ist dem fünften Klingelsignal 45 zugeordnet, der vierte Speicherplatz 14 der Speicherliste 10 ist dem zweiten Klingelsignal 42 zugeordnet, der fünfte Speicherplatz 15 der Speicherliste 10 ist dem sechsten Klingelsignal 46 zugeordnet, der sechste Speicherplatz 16 der Speicherliste 10 ist dem vierten Klingelsignal 44 zugeordnet, der siebte Speicherplatz 17 der Speicherliste 10 ist dem siebten Klingelsignal 47 zugeordnet und der achte Speicherplatz 18 der Speicherliste 10 ist dem achten Klingelsignal 48 zugeordnet. Diese Zuordnung kann durch Eingabe an der Eingabeeinheit 30 vom Benutzer beispielsweise mittels eines Eingabemenüs beliebig geändert werden, wobei wie beschrieben auch ein Klingelsignal mehreren Speicherplätzen der Speicherliste 10 zugeordnet werden kann. Es können jedoch nicht mehrere Klingelsignale einem einzigen Speicherplatz 11,..., 18 der Speicherliste 10 zugeordnet werden, genausowenig wie mehrere Sprachsignale beziehungsweise Speicherplätze 31,..., 38 des Sprachbausteins 20 beim Ausführungsbeispiel gemäß Figur 1 einem Speicherplatz 11,..., 18 der Speicherliste 10 zugeordnet sein können. In diesem Fall würde sich sonst bei Auswahl eines Speicherplatzes 11,..., 18 der Speicherliste 10 ein Konflikt zwischen mehreren zugeordneten Sprachsignalen bzw. Klingelsignalen ergeben. Im Ausführungsbeispiel nach Figur 2 wurde von der Rufidentifikationsschaltung 5 eine Rufinformation ermittelt, die mit der auf dem vierten Speicherplatz 14 der Speicherliste 10 abgespeicherten Rufinformation übereinstimmt. Der vierte Speicherplatz 14 der Speicherliste 10 ist daher in Figur 2 schraffiert dargestellt. Der Klingelsignalgenerator 25 erzeugt dann das dem vierten Speicherplatz 14 der Speicherliste 10 zugeordnete zweite Klingelsignal 42, das dann vom Lautsprecher 40 akustisch wiedergegeben wird.

Auf diese Weise lassen sich verschiedene rufende Teilnehmer durch unterschiedliche Klingelsignale vom Benutzer des Telekommunikationsendgerätes 1 identifizieren.

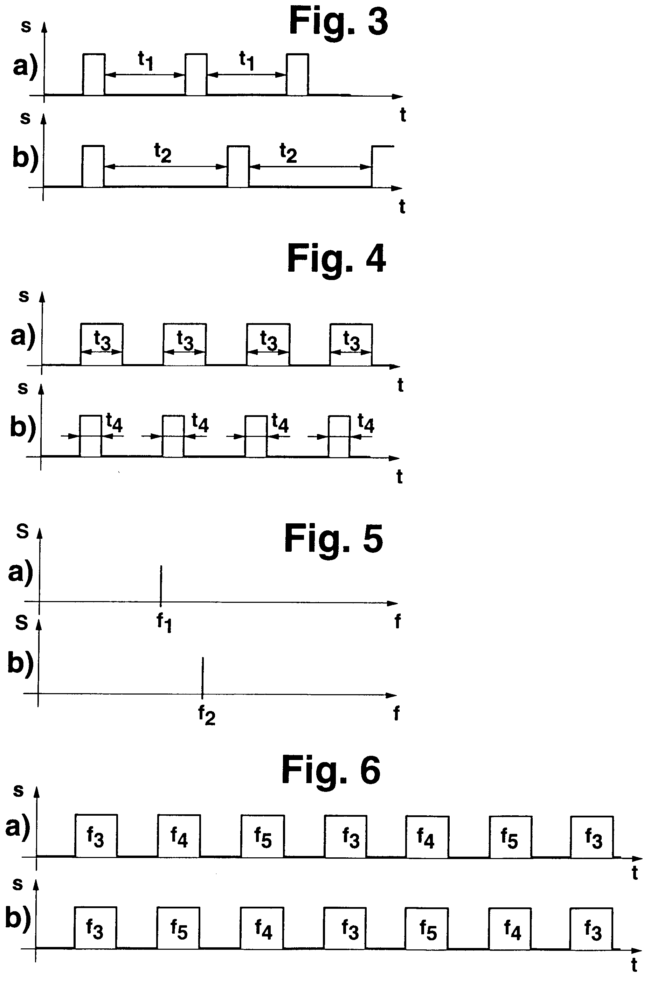

Gemäß den Figuren 3 bis 6 sind verschiedene Möglichkeiten für die Erzeugung unterschiedlicher Klingelsignale durch den Klingelsignalgenerator 25 dargestellt. Dabei zeigen die Figuren 3, 4 und 6 jeweils den Verlauf einer Amplitude s zweier Klingelsignale über der Zeit t, wobei die Klingelsignale jeweils eine periodische Folge von Klingeltönen umfassen, deren Umhüllende in den Figuren 3, 4 und 6 für positive Amplitudenwerte in Impulsform dargestellt sind. In Figur 3 sind zwei Klingelsignale dargestellt, die sich in der Periode der Klingeltöne unterscheiden. So beträgt der zeitliche Abstand zwischen zwei Klingeltönen gemäß Figur 3a) bei einem ersten Klingelsignal eine erste Zeit t₁ und bei einem zweiten Klingelsignal gemäß Figur 3b) eine zweite Zeit t₂, die größer als die erste Zeit t₁ ist. Gemäß Figur 4 weisen die beiden dargestellten Klingelsignale die gleiche Periodendauer auf, sie unterscheiden sich jedoch in der Klingeltondauer. Gemäß Figur 4a) ist ein erstes Klingelsignal dargestellt, dessen Klingeltöne jeweils für eine dritte Zeit t₃ vom Lautsprecher 40 wiedergegeben werden, wohingegen gemäß Figur 4b) ein zweites Klingelsignal dargestellt ist, dessen Klingeltöne jeweils für eine vierte Zeit t₄, die kleiner als die dritte Zeit t₃ ist, vom Lautsprecher 40 wiedergegeben werden.

Gemäß Figur 5 ist der Verlauf S des Klingeltonspektrums zweier Klingelsignale über der Frequenz f dargestellt. Ein erstes Klingelsignal umfaßt dabei gemäß Figur 5a) Klingeltöne bei einer ersten Frequenz f₁ und ein zweites Klingelsignal umfaßt gemäß Figur 5b) Klingeltöne bei einer zweiten Frequenz f₂, die größer als die erste Frequenz f₁ ist.

In Figur 6 ist der zeitliche Verlauf zweier Klingelsignale mit gleicher Periodendauer und gleicher Klingeltondauer dargestellt. Außerdem weisen die beiden Klingelsignale Klingeltöne bei einer dritten Frequenz f₃, bei einer vierten Frequenz f₄ und bei einer fünften Frequenz f₅ auf. Dabei werden bei beiden Klingelsignalen periodisch drei Klingeltöne wiederholt, die jeweils die gleiche Frequenzfolge aufweisen. So wird gemäß Figur 6a) beim ersten Klingelsignal der jeweils erste der periodisch wiederholten drei Klingeltöne bei der dritten Frequenz f₃, der jeweils zweite Klingelton bei der vierten Frequenz f₄ und der jeweils dritte Klingelton bei der fünften Frequenz f₅ vom Lautsprecher 40 wiedergegeben. Beim zweiten Klingelsignal gemäß Figur 6b) wird der jeweils erste Klingelton bei der dritten Frequenz f₃, der jeweils zweite Klingelton bei der fünften Frequenz f₅ und der jeweils dritte Klingelton bei der vierten Frequenz f₄ vom Lautsprecher 40 wiedergegeben.

Das erfindungsgemäße Telekommunikationsendgerät 1 ist jedoch nicht auf die beschriebenen Arten der Erzeugung unterschiedlicher Klingelsignale beschränkt. Außerdem sind auch Klingelsignale mit Kombinationen der Ausführungsbeispiele gemäß den Figuren 3 bis 6 bzw. weiterer nicht beschriebener Klingelsignalvarianten realisierbar.

Es kann auch vorgesehen sein, dem Benutzer über die Eingabeeinheit 30 die Auswahl zwischen verschiedenen, vom Klingelsignalgenerator 25 erzeugbaren Klingelsignalen für die den Speicherplätzen 11,..., 18 der Speicherliste 10 zuzuordnenden Klingelsignale zu ermöglichen.

Über die Eingabeeinheit 30 kann der Benutzer auch Rufnummern und zugeordnete Teilnehmernamen in den Speicherplätzen 11,..., 18 der Speicherliste 10 abspeichern, wobei für den Fall, daß die vom Telekommunikationsnetz an das Telekommunikationsendgerät 1 übertragenen Rufinformationen als Rufnummer ausgebildet sind, ein Vergleich mit den auf den Speicherplätzen 11,..., 18 der Speicherliste 10 abgespeicherten Rufnummern erfolgen kann.

Zusätzlich zur beschriebenen akustischen Identifikation eines rufenden Teilnehmers kann auch eine optische Identifikation, beispielsweise mittels Darstellung der Rufnummer und des Namens des rufenden Teilnehmers auf einer in den Figuren 1 und 2 nicht dargestellten Anzeigevorrichtung erfolgen.

Es kann auch vorgesehen sein, dem Benutzer mittels der Eingabeeinheit 30 die Möglichkeit zu geben, die akustische Identifikation eines rufenden Teilnehmers einzuschalten oder auszuschalten. Bei ausgeschalteter akustischer Identifikation erfolgt keine Sprachwiedergabe des Namens eines rufenden Teilnehmers beziehungsweise keine Differenzierung des Klingelsignals nach dem jeweils rufenden Teilnehmer.

Die Speicherliste 10 kann für die Ausbildung des Telekommunikationsendgerätes 1 als Mobiltelefon auch zumindest teilweise mittels eines Speicherchips einer Zugangsberechtigungskarte realisiert sein. Das bedeutet, daß zumindest ein Teil der Speicherplätze 11,..., 18 der Speicherliste 10 auf dem Speicherchip der Zugangsberechtigungskarte vorgesehen sein kann.

Weiterhin ist es auch möglich, daß nicht jedem Speicherplatz 11,..., 18 in der Speicherliste 10 ein akustisches Signal zugeordnet ist.

## Patentansprüche

1. Telekommunikationsendgerät (1) mit einer Rufidentifikationsschaltung (5), die einen rufenden Teilnehmer identifiziert, dadurch gekennzeichnet, daß das Telekommunikationsendgerät (1) bei einem ankommenden Ruf in Abhängigkeit des in der Rufidentifikationsschaltung (5) identifizierten Teilnehmers ein akustisches Signal abgibt.

2. Telekommunikationsendgerät (1) nach Anspruch 1, dadurch gekennzeichnet, daß dem Telekommunikationsendgerät (1) eine Speicherliste (10) mit Speicherplätzen (11,...,18) zugeordnet ist, in denen teilnehmerspezifische Daten ablegbar sind und daß mindestens einem Speicherplatz (11,...,18) in der Speicherliste (10) ein akustisches Signal zugeordnet ist, das das Telekommunikationsendgerät (1) abgibt, wenn der durch die auf dem Speicherplatz (11,...,18) abgelegten Daten spezifizierte Teilnehmer bei einem eingehenden Ruf identifiziert ist.

3. Telekommunikationsendgerät (1) nach Anspruch 2, dadurch gekennzeichnet, daß ein Sprachbaustein (20) dem Telekommunikationsendgerät (1) zugeordnet ist, in dem als Sprachsignale Namen von Teilnehmern speicherbar und/oder synthetisierbar und jeweils mindestens einem Speicherplatz (11,...,18) in der Speicherliste (10) zugeordnet sind.

4. Telekommunikationsendgerät (1) nach Anspruch 2 oder 3, dadurch gekennzeichnet, daß ein Klingelsignalgenerator (25) vorgesehen ist, der Klingelsignale erzeugt, die jeweils mindestens einem Speicherplatz (11,...,18) in der Speicherliste (10) zugeordnet sind.

5. Telekommunikationsendgerät (1) nach Anspruch 4, dadurch gekennzeichnet, daß verschiedene Klingelsignale Klingeltöne aufweisen, die sich im zeitlichen Abstand der einzelnen Klingeltöne und/oder in der Tonfrequenz und/oder in der Tonfrequenzfolge und/oder in der Dauer unterscheiden.

6. Telekommunikationsendgerät (1) nach einem der Ansprüche 2 bis 5, dadurch gekennzeichnet, daß eine Eingabeeinheit (30) vorgesehen ist, über die die Zuordnung der akustischen Signale zu den Speicherplätzen (11,...,18) in der Speicherliste (10) vorgebbar ist.
